(19) **Europäisches Patentamt / European Patent Office / Office européen des brevets**

(11) **EP 2 218 589 B1**

(12) **EUROPEAN PATENT SPECIFICATION**

(45) Date of publication and mention of the grant of the patent:
**29.08.2012 Bulletin 2012/35**

(51) Int Cl.:
**B60C 9/20** (2006.01)   **B60C 9/22** (2006.01)
**D07B 1/06** (2006.01)

(21) Application number: **08853314.6**

(22) Date of filing: **27.11.2008**

(86) International application number:
**PCT/JP2008/071541**

(87) International publication number:
**WO 2009/069697 (04.06.2009 Gazette 2009/23)**

(54) **PNEUMATIC RADIAL TIRE**

RADIALLUFTREIFEN

PNEU À CARCASSE RADIALE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.11.2007 JP 2007305437**
**05.06.2008 JP 2008147651**

(43) Date of publication of application:
**18.08.2010 Bulletin 2010/33**

(73) Proprietor: **Bridgestone Corporation**
**Tokyo 104-8340 (JP)**

(72) Inventors:
• **NAOI, Koichi**
  **Kodaira-shi**
  **Tokyo 187-0031 (JP)**

• **ONUKI, Atsushi**
  **Kodaira-shi**
  **Tokyo 187-0031 (JP)**

(74) Representative: **Oxley, Robin John George**
  **Marks & Clerk LLP**
  **90 Long Acre**
  **London**
  **WC2E 9RA (GB)**

(56) References cited:
**EP-A1- 1 477 333      EP-A1- 1 630 002**
**EP-A2- 0 425 318      JP-A- 2002 339 278**
**JP-A- 2002 339 278      JP-A- 2007 039 831**
**JP-A- 2008 162 366      JP-A- 2008 189 274**

**Description**

TECHNICAL FIELD

The present invention relates to a pneumatic radial tire (hereinafter, also simply referred to as "tire"). Particularly, the present invention relates to a pneumatic radial tire comprising a circumferential belt layer which comprises a plurality of corrugated or zigzag-shaped steel cords extending along the tire circumferential direction.

BACKGROUND ART

Conventionally, pneumatic radial tires are provided with a circumferential belt in the tire circumferential direction as its belt layer, and it is also known to apply corrugated or zigzag-shaped cords to such a circumferential belt.
For instance, Patent Document 1 discloses a heavy-duty radial tire, particularly a planar tire used for trucks and buses, as well as off-road vehicles, which tire is used with a high inner pressure. Therein, a number of cords or filaments extending in a corrugated or zigzag shape along the equatorial plane of the tire are used as the reinforcing elements, and a plurality of ply layers in which these reinforcing elements are covered with rubber are used in place of belts comprising cords obliquely arranged or in addition to such belts.
Further, Patent Document 2 discloses a technique to effectively prevent a separation without increasing the weight of a tire by placing two intersecting belt layers on the tread portion around the carcass and thereunder at least one layer of strip-from crown reinforcing layer comprising reinforcing elements which are a number of corrugated (or zigzag-shaped) cords (or filaments) oriented along the tire circumferential direction.
However, cords and the like in the strip-form crown reinforcing layer oriented along the tire circumferential direction are usually wound in a spiral form in the circumferential direction, therefore, in cases where a damage or the like reaches the neighborhood of the crown reinforcing layer along the tire circumferential direction, there is a concern that water is likely to infiltrate from outside and diffuse in the circumferential longitudinal direction. Hence, it is required to maintain filament-filament space between sheath filaments more than necessary and allow rubber to permeate into the steel cords in order to prevent the diffusion of water.
As for the technique for allowing rubber to permeate into a steel cord, Patent Document 3 discloses a large-sized pneumatic radial tire in which steel cords having the bending radius of curvature (R) of approximately 23 mm when embedded in the belt layer of the tire are utilized as the belt layer.

Patent Document 1: Japanese Unexamined Patent Application Publication No. 11-245617
Patent Document 2: Japanese Patent No. 2623003
Patent Document 3: Japanese Patent No. 3444925

EP 0425318 describes known pneumatic radial tires according to the preamble of claim 1 and 2; JP 2002 339278 describes a steel cord for reinforcing a fine and a tire; and EP1630002 describes a known pneumatic tire with metal cord and a method of manufacturing a metal cord.

DISCLOSURE OF THE INVENTION

PROBLEMS TO BE SOLVED BY THE INVENTION

In a steel cord processed into a corrugated or zigzag shape, however, since the radius of curvature (R) is locally small at the bent portions, there is a problem in that bending strains are likely to concentrate at these bent portions due to energy input in the tire circumferential direction. This is a factor to lower the durability performance of the steel cord.
In addition, in a tire having a circumferential belt which comprises corrugated or zigzag-shaped steel cords, the circumferential belt experiences a large stress due to its structure. As the circumferential belt directly receives strains during rolling of the tire, it would be subjected to repeated strain deformation during rolling of the tire. Thus, there is a concern for a decrease in the durability, such as occurrence of separation, caused by an increase in energy input associated with the future increase in the tire size and planarization of tires; therefore, it is an urgent task to improve the durability of circumferential belt.
Furthermore, in order to improve the durability of circumferential belt, an improvement in the corrosion-resistance performance of reinforcing cords is also desired.
In view of the above, the object of the present invention is to provide a technique which can prevent particularly the fatigue rupture of steel cords, which is a concern when energy input will be increased in the future, by improving the durability of circumferential belt in a pneumatic radial tire utilizing corrugated or zigzag-shaped steel cords for its circumferential belt.

Further, in addition to the object stated in the above, another object of the present invention is to provide a pneumatic radial tire whose corrosion-resistance performance of the belt reinforcing cords is improved more than ever.

MEANS FOR SOLVING THE PROBLEMS

In order to solve the above-described problems, the present inventors intensively studied to discover that the durability of a cord can be improved by setting a large radius of curvature (R) at the bent portions of the corrugated or zigzag-shaped steel cord to dissipate the concentrated bending strains from these portions, thereby completing the present invention.

According to a first aspect of the present invention, there is provided a pneumatic radial tire as claimed in claim 1. According to a further aspect of the invention, there is provided a pneumatic radial tire as claimed in claim 2.

Further, it is preferred that the aforementioned belt layer comprise one to four layers of the aforementioned circumferential belt. It is also preferred that the aforementioned belt layer comprise one to three layers of intersecting belt which comprises cords extending obliquely with respect to the tire circumferential direction.

EFFECTS OF THE INVENTION

By having the above-described constitution, the present invention enabled to achieve a pneumatic radial tire capable of effectively preventing the fatigue rupture of steel cords by improving the durability of the corrugated steel cords in the circumferential belt. Further, at the same time, the present invention achieved a pneumatic radial tire with an improved corrosion-resistance performance.

BRIEF DESCRIPTION OF THE DRAWINGS

Fig. 1 is an enlarged cross-sectional view illustrating the neighborhood of the tread portion of one example of the pneumatic radial tire of the present invention.
Fig. 2 is a schematic view illustrating a steel cord processed into a corrugated shape.
Fig. 3 is a graph showing a strain-load curve of a steel cord.
Fig. 4 is a drawing explaining the sheath filament diameter (df) and the filament-filament space ($\Delta L$).

DESCRIPTION OF SYMBOLS

1: Carcass
2: Belt layer
3: Circumferential belt
4: Intersecting belt
5: Tread layer
10: Pneumatic radial tire
20: Steel filament
R: Bending radius of curvature of steel cord
df: Sheath filament diameter
$\Delta L$: Filament-filament space
a: Amplitude
$\lambda$: Wavelength

BEST MODE FOR CARRYING OUT THE INVENTION

A preferred embodiment of the present invention will be described in detail referring to the drawings.

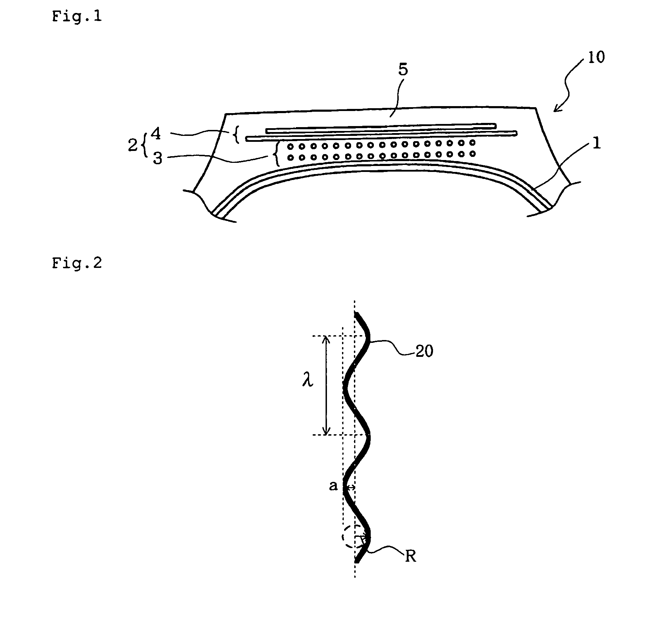

Fig. 1 is an enlarged cross-sectional view illustrating the neighborhood of the tread portion of one example of the pneumatic radial tire of the present invention. A illustrated pneumatic radial tire 10 of the present invention has a carcass 1 as the skeleton extending in a toroidal shape between a pair of bead portions (not shown) on either side of the tire, as well as a belt layer 2 and a tread layer 5 successively arranged thereonto at the outer part in the tire radial direction.

In the present invention, the belt layer 2 comprises at least one layer of circumferential belt 3, and two layers thereof in the illustrated example, which layer comprises a plurality of corrugated or zigzag-shaped steel cords extending along the tire circumferential direction. When the steel cords are removed from the circumferential belt 3 in the tire without allowing the shape to change, the bending radius of curvature (R) of the steel cords is within the range from not less than 18 mm to not more than 125 mm and preferably in the range from not less than 20 mm to not more than 75 mm.

As already described, bending strains become concentrated at the bent portions in a corrugated or zigzag-shaped steel cord and depending on an increase in energy input associated with the future increase in the tire size and the like, there is a concern that a fatigue rupture of the steel cord occurs originating at such bent portions. In order to prevent such fatigue rupture, it is effective to increase the radius of curvature (R) at these bent portions, thereby mitigating the concentration of bending strains. The present invention enabled to prevent the occurrence of fatigue rupture by setting the radius of curvature (R) of the bent portions at the above-described range to effectively mitigate the concentrated bending strains.

In the present invention, as shown in Fig. 2, the radius of curvature (R) at the bent portions is defined as a radius of curvature which is measured by approximating with a circular arc the bent portions of steel cord 20 (amplitude (a) and wavelength ($\lambda$)) processed into a corrugated or zigzag shape. Specifically, an ideal radius of curvature (R) is, with the a representing the amplitude and $\lambda$ representing the wavelength, $R = (1/a)(\lambda/2\pi)^2$. When this radius of curvature (R) is less than 18 mm, mitigation of bending strains would be insufficient and strains would become easily concentrated at the bent portions, resulting in a decrease in the cord fatigue resistance. On the other hand, when the radius of curvature (R) exceeds 125 mm, the necessary amount of steel for a tire cannot be secured. Consequently, there arise concerns for other performances, for example, it would be difficult to maintain the initial strain required in tire production, resulting in an increase in likelihood of buckling failure and the like.

It is preferred that, when removed from the tire, the wavelength ($\lambda$) of the steel cords processed into a corrugated or zigzag shape be 20 mm to 120 mm, and that the value of the amplitude (a) divided by the $\lambda$ satisfy the relation represented by the following formula:

$$0.025 \leq a / \lambda \leq 0.065$$

Further, it is preferred that the above-described steel cords constituting the circumferential belt 3 be twist cords which comprises filaments having a filament diameter in the range from not less than 0.12 mm to not more than 0.45 mm, particularly from not less than 0.15 mm to not more than 0.36 mm. It is preferred that the steel cords have a cord diameter in the range from not less than 1.20 mm to not more than 3.00 mm, particularly from not less than 1.20 mm to not more than 2.00 mm, and that the initial elongation strain be in the range from not less than 0.3% to not more than 3.0%, particularly not less than 0.9% to not more than 2.0%. By using such steel cords, a more favorable cord durability can be maintained.

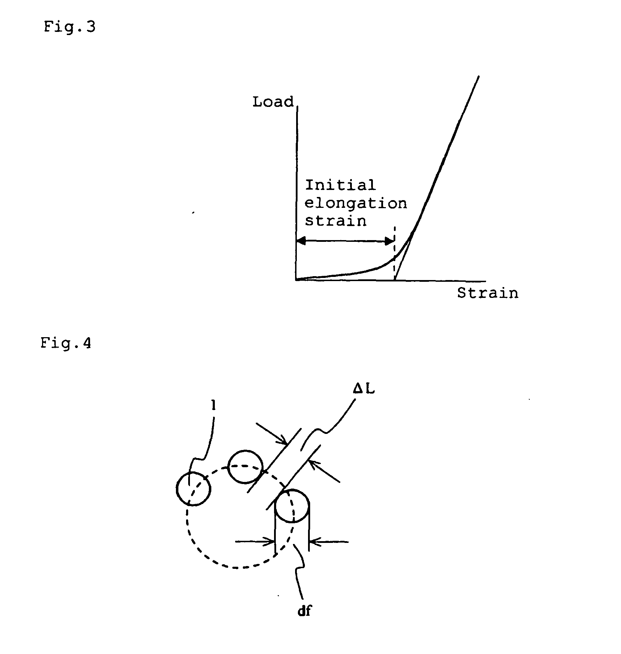

In cases where the above-described initial elongation strain of the steel cords is less than 0.3%, the cords become fully elongated when the inner pressure of the tire is increased and at the time of diameter growth and the shape of the tire becomes abnormal due to buckling, thereby causing a deterioration of the partial wear resistance. On the other hand, when the initial elongation strain of the steel cords exceeds 3.0%, the diameter growth by increased inner pressure becomes excessive, which causes the tread rubber on the tire surface to be in a stretched condition, thereby resulting in a disadvantage in the abrasion resistance and anti-cutting performance. Here, the initial elongation strain of a steel cord is defined by a strain-load curve as shown in Fig. 3.

In particular, it is preferred to use, as the steel cords of the above-described circumferential belt 3, a steel material with a strength of not less than 2,500 MPa for steel cords having the above-described radius of curvature (R) in the range from not less than 20 mm to not more than 30 mm, and a steel material with a strength of not less than 2,900 MPa for steel cords having the above-described radius of curvature (R) in the range from more than 30 mm to not more than 75 mm. It is not preferred to use a steel material with a strength less than the above ranges since a sufficient steel cord strength required for a tire is not attained.

In addition, examples of suitable steel cord in the present invention include steel cords obtained by shaping a layer-twisted steel cord into a corrugated or zigzag shape, in which layer-twisted steel cord a plurality of steel filaments are intertwisted into two or three layers. In such steel cords, the ratio ($\Delta$L/df) of the filament-filament space ($\Delta$L) at least between sheath filaments and the sheath filament diameter (df) is preferably 0.08 to 1.00, and more preferably within the range from 0.20 to 0.70.

Fig. [4] is a drawing explaining the filament-filament space ($\Delta$L) between sheath filaments and the filament diameter (df). By setting the value of $\Delta$L/df at 0.08 to 1.00, rubber sufficiently permeates into the steel cord, filling inside the cord with rubber. As a result, even if water infiltrated from outside, the diffusion thereof in the longitudinal direction can be prevented. On the other hand, when the value of $\Delta$L/df exceeds 1.00, the tension balance of each filament is upset upon repeated input of tensile force, causing a decrease in the durability of the steel cord, while when the value

of ∆L/df is less than 0.08, rubber hardly permeates into the steel cord, resulting in an insufficient effect of the corrosion-resistance performance of the belt reinforcing cord.

Further, in the present invention, it is preferred that the value of df be in the range from 0.15 mm to 0.36 mm. When the value of df is less than 0.15 mm, it becomes difficult to maintain the durability of the steel cord. In contrast, when the value of df exceeds 0.36 mm, rubber hardly permeates into the steel cord; therefore, the effects of the present invention cannot be favorably attained.

The filament-filament space (∆L) can be adjusted, for example, by decreasing the number of filaments in the sheath part or by increasing the number of filaments in the core part. In addition, the filament-filament space (∆L) can also be adjusted by a method of, for example, narrowing the filament diameter only in the sheath part or thickening the filament diameter only in the core part, reducing the twist pitch of the filaments, or reducing the tensile force during shaping, or by a combination of these methods.

In the present invention, the belt layer 2 comprises at least one layer of the above-described circumferential belt [3] and preferably one to four layers thereof. If the number of layers of the circumferential belt 2 is five or more, the entire gauge would be too thick, thereby resulting in an increase in the weight and deterioration of the thermal durability; therefore, it is preferred that the number of layers of the circumferential belt 3 be one to four. Here, the circumferential belt 3 can be formed by a strip (s) in which steel cords, as a whole, are oriented along the tire circumferential direction.

Further, the belt layer 2 preferably comprises, in addition to the above-described circumferential belt 3, one to three layers of intersecting belt 4 which comprises cords extending obliquely with respect to the tire circumferential direction. In the illustrative example, two layers of intersecting belt 4 intersecting between layers are arranged. In cases where the intersecting belt 4 is not arranged, deformation of the tire in the width direction may not be prevented and the partial wear resistance may be deteriorated. On the other hand, if four or more layers of intersecting belt 4 are arranged, the entire gauge would be too thick, which may result in an increase in the weight and deterioration of the thermal durability.

In addition, in the tire 10 of the present invention, a tread pattern is appropriately formed onto the surface of the tread layer 5, which is arranged on the crown portion of the carcass 1 at the outer part in the tire radial direction, and an inner liner (not shown) is arranged in the innermost layer of the tire. Further, in the tire of the present invention, an air of normal or modified oxygen partial pressure or inert gas such as nitrogen can be used as the gas filled in the tire.

EXAMPLES

The present invention will be explained in more detail by way of examples thereof.

(Examples 1 to 5 and Comparative Examples 1 to 5)

Each pneumatic radial tire of tire size 495/45R22.5 having the structure illustrated in Fig. 1 was produced by altering the conditions for corrugating the steel cord applied to the circumferential belt (triple layer twist: 3 + 9 + 15 structure) as shown in Tables 1 and 2 below.

In each of the test tires, the belt layer 2 comprises two layers of the circumferential belt 3, which comprises a plurality of corrugated steel cords extending along the tire circumferential direction, and two layers of the intersecting belt 4, which comprises cords extending obliquely with respect to the tire circumferential direction.

<Evaluation of fatigue characteristics>

The fatigue characteristics of the steel cords in each test tire were evaluated by a 70,000km indoor running test at 60 km/h under a regular tire inner pressure and load condition of 120% of a regular load, followed by an X-ray inspection. In the X-ray inspection, ◎, ○ and × were assigned when there was no rupture of the cords, when a minor rupture of the cords was observed but it did not present any practical problem ,and when a rupture of the cords was present, respectively. The results thereof are shown in both of Tables 1 and 2 below.

[Table 1]

| | Example 1 | Comparative Example 1 | Comparative Example 2 | Comparative Example 3 | Comparative Example 4 |
|---|---|---|---|---|---|
| Corrugated radius of curvature R (mm) | 30 | 10 | 10 | 150 | 150 |
| Filament diameter of the cord (mm) | 0.23 | 0.23 | 0.23 | 0.23 | 0.5 |
| Cord diameter (mm) | 1.4 | 1.4 | 1.4 | 1.4 | 3.1 |
| Initial elongation strain of the cords (%) | 2.0 | 2.0 | 4.0 | 0.2 | 0.2 |
| Presence or absence of cord rupture | ◎ | × | × | × | × |

[Table 2]

| | Comparative Example 5 | Example 2 | Example 3 | Example 4 | Example 5 |
|---|---|---|---|---|---|
| Corrugated radius of curvature R (mm) | 150 | 100 | 20 | 100 | 50 |
| Filament diameter of the cord (mm) | 0.1 | 0.5 | 0.23 | 0.23 | 0.23 |
| Cord diameter (mm) | 0.6 | 3.1 | 1.4 | 1.4 | 1.4 |
| Initial elongation strain of the cords (%) | 0.1 | 1.0 | 2.0 | 1.0 | 1.3 |
| Presence or absence of cord rupture | × | O | ◎ | ◎ | ◎ |

As shown in Tables 1 and 2 in the above, it was confirmed that the durability of the steel cords could be improved in the pneumatic radial tires of Examples in which corrugated steel cords satisfying the conditions according to the present invention were utilized in the circumferential belt.

The present invention will be explained in more detail by way of examples thereof.

(Examples 6 to 10 and Comparative Examples 6 to 11)

Each steel cord was prepared by processing a steel cord having the cord structure and filament diameter shown in Tables 3 and 4 below in such a manner that the steel cord has the prescribed bending radius of curvature and ΔL/df.

Next, each test tire was individually produced by applying each of the thus obtained steel cords to a tire having the structure shown in Table 1 (tire size 495/45R22.5, total number of layers: 4; intersecting belt layers: 2 and belt reinforcing layers: 2) in the same manner as in Example 1. Thereafter, the rubber permeability, water diffusibility and cord fatigue resistance were evaluated using the thus obtained tires. The results thereof are shown in both of Tables 3 and 4 below. Here, the rubber permeability, water diffusibility and cord fatigue resistance are defined as follows.

(Rubber permeability)

The steel cords were extracted from each tire which was produced by applying the test steel cords. All of the filaments in the outer layer were removed and after taking out the core part, the length of the core filament covered with rubber when viewed from four directions was measured. The rubber permeability was calculated using the following formula (1): Rubber permeability (%) = Length of rubber coverage (mm) / Length of test cord (mm) $\times$ 100 (1).

(Water diffusibility)

The steel cords were extracted from each tire which was produced by applying the test steel cords. The water diffusibility thereof was measured upon subjecting the thus extracted steel cords to repeated strains of 10,000,000 times under the conditions of initial load = strength $\times$ 0.2, repeated loads = strength $\times$ 0.05 and environmental humidity of 90%. The maximum length of corroded part was determined to calculate the water diffusibility using the following formula (2):

$$\texttt{Water diffusibility (\%) = maximum length of corrosion (mm) /}$$

$$\texttt{distance between chucks (mm) × 100 (2).}$$

(Cord fatigue resistance)

The cord fatigue resistance was evaluated by subjecting each tire produced by applying the test steel cords to an in-vehicle running test under a regular tire inner pressure and load condition of 120% of a regular load, followed by an X-ray inspection. For the steel cords at the edge of the belt layer, those with a superior fatigue resistance were assigned with $\bigcirc$, while those with inferior fatigue resistance were assigned with $\times$.

[Table 3]

|  | Example 6 | Comparative Example 6 | Comparative Examples 7 | Comparative Example 8 | Comparative Example 9 |
|---|---|---|---|---|---|
| Cord structure | 3+8+13 | 3+9+15 | 3+9+15 | 3+5+7 | 3+8+13 |
| Bending radius of curvature of the cord (mm) | 20 | 20 | 20 | 20 | 10 |
| Filament diameter (mm) | 0.23 | 0.10 | 0.15 | 0.5 | 0.23 |
| $\Delta$L/df | 0.23 | 0.03 | 0.06 | 1.3 | 0.05 |
| Rubber permeability (%) | 90 | 15 | 20 | 80 | 60 |
| Water diffusibility (%) | 5 | 70 | 65 | 10 | 30 |
| Cord fatigue resistance | $\bigcirc$ | $\times$ | $\times$ | $\times$ | $\times$ |

[Table 4]

|  | Comparative Example 10 | Comparative Example 11 | Example 7 | Example 8 | Example 9 | Example 10 |
|---|---|---|---|---|---|---|
| Cord structure | 4+9+14 | 4+9+14 | 4+9+14 | 4+9+14 | 3+8 | 3+9 |
| Bending radius of curvature of the cord (mm) | 150 | 150 | 30 | 75 | 30 | 30 |

(continued)

|  | Comparative Example 10 | Comparative Example 11 | Example 7 | Example 8 | Example 9 | Example 10 |
|---|---|---|---|---|---|---|
| Filament diameter (mm) | Core:0.23 Sheath:0.21 | Core:0.23 1st Sheath:0.22 2nd Sheath: 0.21 | Core:0.23 Sheath:0.21 | Core:0.23 Sheath:0.21 | 0.34 | Core:0.36 1st Sheath:0.30 |
| ΔL/df | 0.19 | 0.26 | 0.19 | 0.19 | 0.22 | 0.23 |
| Rubber permeability (%) | 95 | 95 | 95 | 95 | 95 | 96 |
| Water diffusibility (%) | 2 | 2 | 2 | 2 | 2 | 2 |
| Cord fatigue resistance | ○ | ○ | ○ | ○ | ○ | ○ |

According to Tables 3 and 4 in the above, it can be seen that the tires of the present invention had an increased rubber permeability, improved water diffusibility and improved durability against corrosion. In addition, at the same time, the cord fatigue resistance in these tires was also improved. However, while the cord fatigue resistance of Comparative Examples 10 and 11 were evaluated as "O", they were slightly inferior to those of Examples 7 and 8 whose the radius of curvature of the cords was not more than 125 mm.

**Claims**

1. A pneumatic radial tire (10) having a carcass (1) as the skeleton extending in a toroidal shape between a pair of bead portions on either side of the tire (10), as well as a belt layer (2) and a tread layer (5) successively arranged onto said carcass (1) at the outer part in the tire radial direction,
said belt layer (2) comprising at least one circumferential belt layer (3) which comprises a plurality of corrugated or zigzag-shaped steel cords extending along the tire circumferential direction, and the bending radius of curvature (R) of said steel cords, when removed from said circumferential belt (3), being within the range from not less than 18 mm to not more than 125 mm, **characterized in that**
said steel cords of circumferential belt (3) are twisted cords which comprises filaments (20) having a filament diameter of not less than 0.12 mm and not more than 0.45 mm, and said steel cords having a cord diameter of not less than 1.20 mm and not more than 3.00 mm and an initial elongation strain in the range from not less than 0.3% to not more than 3.0%.

2. A pneumatic radial tire (10) having a carcass (1) as the skeleton extending in a toroidal shape between a pair of bead portions on either side of the tire (10), as well as a belt layer (2) and a tread layer (5) successively arranged onto said carcass (1) at the outer part in the tire radial direction,
said belt layer (2) comprising at least one circumferential belt layer (3) which comprises a plurality of corrugated or zigzag-shaped steel cords extending along the tire circumferential direction, and the bending radius of curvature (R) of said steel cords, when removed from said circumferential belt, being within the range from not less than 18 mm to not more than 125 mm, **characterized in that**
said steel cords are layer-twisted steel cords shaped into a corrugated or zigzag shape, in which layer-twisted steel cords a plurality of steel filaments (20) are intertwisted into two or three layers and the ratio (ΔL/df) of the filament-filament space (ΔL) at least between sheath filaments and the sheath filament diameter (df) is 0.08 to 1.00.

3. The pneumatic radial tire (10) according to claim 1 or 2, wherein said belt layer (2) comprises one to four layers of said circumferential belt (3).

4. The pneumatic radial tire (10) according to claim 1 or 2, wherein said belt layer (2) comprises one to three layers of intersecting belt (4) comprising cords extending obliquely with respect to the tire circumferential direction.

**Patentansprüche**

1.  Radialluftreifen (10) mit einer Karkasse (1) als das Skelett, das sich in einer Ringform zwischen einem Paar Wulstabschnitten auf beiden Seiten des Reifens (10) erstreckt, ebenso wie einer Gürtellage (2) und einer Laufflächenlage (5), die aufeinanderfolgend auf der Karkasse (1) im äußeren Teil in der radialen Richtung des Reifens angeordnet sind,
    wobei die Gürtellage (2) mindestens eine periphere Gürtellage (3) aufweist, die eine Vielzahl von gewellten oder zickzackförmigen Stahlkorden aufweist, die sich längs der Umfangsrichtung des Reifens erstrecken, und wobei der Biegekrümmungsradius (R) der Stahlkorde, wenn sie aus dem peripheren Gürtel (3) entfernt sind, innerhalb des Bereiches von nicht weniger als 18 mm bis zu nicht mehr als 125 mm liegt, **dadurch gekennzeichnet, dass**:

    die Stahlkorde des peripheren Gürtels (3) gezwirnte Korde sind, die Filamente (20) mit einem Filamentdurchmesser von nicht kleiner als 0,12 mm und nicht größer als 0,45 mm aufweisen, und wobei die Stahlkorde einen Korddurchmesser von nicht weniger als 1,20 mm und nicht mehr als 3,00 mm aufweisen und eine anfängliche Dehnungsformänderung im Bereich von nicht weniger als 0,3 % bis nicht mehr als 3,0 % liegt.

2.  Radialluftreifen (10) mit einer Karkasse (1) als das Skelett, das sich in einer Ringform zwischen einem Paar Wulstabschnitten auf beiden Seiten des Reifens (10) erstreckt, ebenso wie einer Gürtellage (2) und einer Laufflächenlage (5), die aufeinanderfolgend auf der Karkasse (1) im äußeren Teil in der radialen Richtung des Reifens angeordnet sind,
    wobei die Gürtellage (2) mindestens eine periphere Gürtellage (3) aufweist, die eine Vielzahl von gewellten oder zickzackförmigen Stahlkorden aufweist, die sich längs der Umfangsrichtung des Reifens erstrecken, und wobei der Biegekrümmungsradius (R) der Stahlkorde, wenn sie aus dem peripheren Gürtel entfernt sind, innerhalb des Bereiches von nicht weniger als 18 mm bis zu nicht mehr als 125 mm liegt, **dadurch gekennzeichnet, dass**:

    die Stahlkorde lagenverzwirnte Stahlkorde sind, die zu einer gewellten oder Zickzackform ausgebildet sind, wobei in den lagenverzwirnten Stahlkorden eine Vielzahl von Stahlfilamenten (20) zu zwei oder drei Lagen miteinander verzwirnt sind, und wobei das Verhältnis ($\Delta L/df$ des Filament-Filament-Zwischenraumes $\Delta L$) mindestens zwischen den Mantelfilamenten und dem Mantelfilamentdurchmesser (df) 0,08 bis 1,00 beträgt.

3.  Radialluftreifen (10) nach Anspruch 1 oder 2, bei dem die Gürtellage (2) ein bis vier Lagen des peripheren Gürtels (3) aufweist.

4.  Radialluftreifen (10) nach Anspruch 1 oder 2, bei dem die Gürtellage (2) ein bis drei Lagen des sich überschneidenden Gürtels (4) aufweist, der Korde aufweist, die sich mit Bezugnahme auf die Umfangsrichtung des Reifens schräg erstrecken.

**Revendications**

1.  Bandage pneumatique radial (10), comportant une carcasse (1) constituant le squelette, s'étendant sous une forme toroïdale entre une paire de parties de talon de chaque côté du bandage pneumatique (10), ainsi qu'une couche de ceinture (2) et une couche de bande de roulement (5), agencées successivement sur ladite carcasse (1) au niveau de la partie externe, dans la direction radiale du bandage pneumatique ;
    ladite couche de ceinture (2) comprenant au moins une couche de ceinture circonférentielle (3), comprenant plusieurs câblés d'acier ondulés ou en zigzag, s'étendant le long de la direction circonférentielle du bandage pneumatique, le rayon de courbure (R) desdits câblés d'acier, lorsqu'ils sont retirés de ladite ceinture circonférentielle (3), étant compris dans l'intervalle allant de pas moins de 18 mm à pas plus de 125 mm, **caractérisé en ce que** :

    lesdits câblés d'acier de la ceinture circonférentielle (3) sont des câblés torsadés, comprenant des filaments (20) ayant un diamètre des filaments non inférieur à 0,12 mm et non supérieur à 0,45 mm, lesdits câblés d'acier ayant un diamètre de câblé non inférieur à 1,20 mm et non supérieur à 3,00 mm, et une contrainte d'allongement initiale comprise dans l'intervalle allant de pas moins de 0,3% à pas plus de 3,0%.

2.  Bandage pneumatique radial (10), comportant une carcasse (1), constituant le squelette, s'étendant sous une forme toroïdale entre une paire de parties de talon de chaque côté du bandage pneumatique (10), ainsi qu'une couche de ceinture (2) et une couche de bande de roulement (5), agencées successivement sur ladite carcasse (1) au niveau de la partie externe dans la direction radiale du bandage pneumatique ;

ladite couche de ceinture (2) comprenant au moins une couche de ceinture circonférentielle (3), comprenant plusieurs câblés d'acier ondulés ou en zigzag, s'étendant le long de la direction circonférentielle du bandage pneumatique, le rayon de courbure (R) desdits câblés d'acier, lorsqu'ils sont retirés de ladite ceinture circonférentielle, étant compris dans l'intervalle allant de pas moins de 18 mm à pas plus de 125 mm, **caractérisé en ce que** :

lesdits câblés d'acier sont des câblés d'acier à couches torsadées, formés en une forme ondulée ou en zigzag, plusieurs filaments d'acier (20) étant torsadés mutuellement dans deux ou trois couches dans les câblés d'acier à couches torsadés, le rapport (AL : df) entre l'espace entre les filaments ($\Delta L$), au moins entre les filaments de gaine, et le diamètre des filaments de gaine (df) étant compris entre 0,08 et 1,00.

3. Bandage pneumatique radial selon les revendications 1 ou 2, dans lequel ladite couche de ceinture (2) comprend une à quatre couches de ladite ceinture circonférentielle (3).

4. Bandage pneumatique radial (10) selon les revendications 1 ou 2, dans lequel ladite couche de ceinture (2) comprend une à trois couches de ceinture à intersection (4), comprenant des câblés s'étendant de manière oblique par rapport à la direction circonférentielle du bandage pneumatique.

Fig.1

Fig.2

Fig.3

Fig.4

**EP 2 218 589 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11245617 A
- JP 2623003 B
- JP 3444925 B
- EP 0425318 A
- JP 2002339278 A
- EP 1630002 A